# EUROPÄISCHE PATENTSCHRIFT

(11) **EP 3 441 257 B1**
(45) Veröffentlichungstag und Bekanntmachung des Hinweises auf die Patenterteilung: **25.03.2020**
(21) Anmeldenummer: 17185568.7
(22) Anmeldetag: 09.08.2017
(51) Int. Cl.: B60M 1/18

(54) **STRECKENTRENNVORRICHTUNG UND VERWENDUNG EINER SOLCHEN**
SECTION INSULATOR AND USE OF SAME
DISPOSITIF D'ISOLATION DE SECTION ET UTILISATION D'UN TEL DISPOSITIF

(43) Veröffentlichungstag der Anmeldung: 13.02.2019
(73) Patentinhaber: Kummler + Matter AG, 8004 Zürich (CH)
(72) Erfinder: Darra, Dennis, 8102 Oberengstringen (CH); Geiger, Simon, 8805 Richterswil (CH); Staubli, Rolf, 4514 Lommiswil (CH)
(74) Vertreter: Patentanwälte Behrmann Wagner PartG mbB

(56) Entgegenhaltungen:
- CN-U- 201 753 028
- CN-Y- 201 371 753
- DE-C- 883 617
- RU-C1- 2 401 751
- US-A- 4 825 987

## Beschreibung

Die vorliegende Erfindung betrifft eine Streckentrennverbindung nach Anspruch 1. Derartige Vorrichtungen sind aus dem Stand der Technik allgemein bekannt und werden eingesetzt, um eine Fahrleitung - typischerweise realisiert als Hochspannung führende Oberleitung für Schienenfahrzeuge - zugfest und gleichzeitig elektrisch isoliert zu trennen. Eine derartige Streckentrennung erzeugt damit Sektoren eines Oberleitungssystems, die jeweils über eine separate (Hochspannungs-)Energieeinspeisung verfügen, mit der Möglichkeit, etwa für Wartungszwecke einzelne Sektoren eines Oberleitungs- bzw. Fahrleitungssystems durch Deaktivieren der Einspeisung abzuschalten. Dabei kann eine Fahrleitungslänge eines derartigen, mittels einer Streckentrennvorrichtung von einem benachbarten Sektor getrennten Sektors weniger als 1km, aber auch eine Länge im zweistelligen Kilometerbereich aufweisen, je nach konkreter lokaler Ausgestaltung des Fahrleitungsnetzes und entsprechenden Erfordernissen.

Eine entsprechende Streckentrennvorrichtung, bei der ein Fahrdraht durch eine Klemme abgeknickt wird ist beispielsweise aus der CN 201 371 753 Y bekannt. Ferner sind zwischen Anschlussköpfen gespannte und mit Isolatormitteln versehene Streckentrenner aus der US 4 825 987 A, der CN 201 753 028 U sowie der RU 2 401 751 C1 bekannt.

Während es traditionell aus dem Stand der Technik bekannt ist, eine Streckentrennvorrichtung, neben geeignet vorzusehenden Isolatormitteln, mithilfe von langgestreckten, sich entlang einer Fahrleitungsrichtung erstreckenden Schienen bzw. Kufen auszugestalten, ist es gleichermaßen als bekannt vorauszusetzen, in der oberbegrifflichen Weise die Streckentrennvorrichtung mittels einer Leitungsstranganordnung zu realisieren, nämlich aus einer üblicherweise eine Mehrzahl von zumindest typischerweise in jedem Einzelstrang dann einen geeignet hochspannungsfesten Isolator unterbrechend eingeschleift aufweisen. Eine mechanische und elektrische Ankopplung an die Fahrleitung, genauer gesagt an aneinander gegenüberstehende, mittels der gattungsgemäßen Streckentrennvorrichtung zu verbindende, freie Enden der Fahrleitung, erfolgt üblicherweise in Form von Fahrdrahtanschlussköpfen, welche jeweils ein zugeordnetes der freien Enden aufnehmen und dann dieses - mechanisch und elektrisch - mit der Leitungsstranganordnung verbinden, welche typischerweise zum Herstellen der Mehrzahl der Einzelstränge eine entsprechende Auffächerung der Anordnung ermöglicht.

Je nach Ausgestaltung einer derartigen, als allgemein bekannt und gattungsbildend vorrausgesetzten Streckenvorrichtung, ist diese für eine Vielzahl von Einsatzzwecken insbesondere zur Realisierung von Hochspannungs-Oberleitungssystemen schienengebundener Fahrzeuge geeignet, wobei damit zu übertragende Fahrspannungen typischerweise bis zu 27kV als Wechselspannung betragen können.

Angesichts zunehmend steigender Fahrgeschwindigkeiten der mit einem Oberleitungssystem mit Fahrspannung zu beaufschlagenden Fahrzeuge stellt es eine besondere Herausforderung dar, insbesondere die die Fahrleitung unterbrechende Streckentrennvorrichtung so auszugestalten, dass diese zwar in der geforderten Weise ihre elektrische Trenn- bzw. Isolatorfunktion der jeweiligen verbundenen freien Enden realisiert, andererseits jedoch im Schleif- bzw. Abgriffsverhalten von kontaktierenden Stromabnehmern der betreffenden Fahrzeuge möglichst übergangslos und homogen agieren. Ein derartiges Problem ist insbesondere im Zusammenhang mit üblichen, abschnittsweise starren Leiterabschnitten in Form der bekannten Schienen bzw. Kufen am Streckentrenner bekannt: Das gleitende Zusammenwirken mit einem sich (durch die Fahrzeugbewegung) bewegenden Stromabnehmer bei einer typischen mittleren Anpresskraft von 100N bis150N führt gerade bei hohen Abgriffsgeschwindigkeiten zu dynamischen Effekten in Form von Impulsbeaufschlagungen, Prallen, Schwingungen und dergleichen der Streckentrennvorrichtung, mit der nachteiligen Konsequenz (punktuellen) Kontaktabrisses, Funkanschlag, unerwünschten Lichtbögen, zusätzlichen Verschleißes durch Kontaktprellen oder dergleichen. Derartige Effekte sind, nicht zuletzt aufgrund verschiedener möglicher Abgriffsgeschwindigkeiten, komplex und nur schwer beherrschbar.

Aus dem Stand der Technik sind diesbezüglich, wie beispielsweise In der DE 883 617 B beschrieben, Fahrdrahtklemmen mit einer Einstellvorrichtung für Streckentrenner mit Profilkuven bekannt.

Ein ähnlicher Effekt tritt auf, wenn anstelle der bekannten schienen- bzw. kufenbasierten Streckentrennvorrichtungen diese eine Leitungsstranganordnung realisiert durch (Fahr-)Leitungsdrahtstränge ausbilden. Diese sind, aufgrund ihrer Realisierung mit einem Drahtmaterial der Fahrleitung (oder einem in den Eigenschaften ähnlichen bzw. vergleichbaren Drahtmaterial) inhärent elastischer und weniger anfällig für das beschriebene nachteilige (Auf-)Schwingen und Prallen, gleichzeitig sorgen in diesem Fall die im Bereich der jeweiligen Fahrdrahtanschlussköpfe (an denen ja das freie Ende der Fahrleitung einerseits in eine Mehrzahl von Fahrdraht-Leitungssträngen der gattungsgemäßen Streckentrennvorrichtung aufgefächert wird) für ein inhomogenes Stufen- bzw. Übergangsproblem, nicht zuletzt als ja, zum Herstellen der notwendigen mechanischen Zugstabilität bei minimierten elektrischen Übergangswiderständen, die jeweiligen Drahtenden vollumfänglich eingefasst werden müssen. Auch hier ist damit der Streckentrenner, zumindest im Bereich der Fahrdrahtanschlussköpfe, hart, potentiell unflexibel und neigt, aufgrund unvermeidbarer Stufungen, (insbesondere in einer für das Stromabnehmen maßgeblichen Schleiferebene) durch Impulse zu Funkenschlag in Verbindung mit nachteiligem Verschleiß sowohl am Streckentrenner als auch am Fahrzeug-Stromabnehmer.

Im Betriebsalltag gattungsgemäßer Streckentrennvorrichtungen führt dies dazu, dass eine Standzeit aktueller Technologie nach bisheriger Erfahrung von nur etwas mehr als 100 000 Beschleifungen (d.h. stromabnehmende Passagen eines Fahrzeug-Stromabnehmersystems) toleriert, bis eine Wartung des Systems, ggf. unter Austausch der Streckentrennvorrichtung oder einzelner Baugruppen, erforderlich ist. Hochfrequentierte Oberleitungsstrecken erreichen teilweise jährlich bis zu 250 000 Beschleifungen oder mehr, sodass eine aktuelle Standzeit zwischen Wartungsintervallen gattungsgemäßer Streckentrenntechnologien signifikant unter einem Jahr liegen kann.

Vor dem Hintergrund, dass eine Wartung (genauso wie auch eine Erstmontage) einer Streckentrennvorrichtung aufgrund der dafür notwendigen Fahrspannungsunterbrechung, verbunden mit einer Schienenfahrzeug-Betriebszeitunterbrechung, typischerweise in der Nacht und damit mit Kunstlicht erfolgt, liegt damit, neben den diskutierten zu verbessernden und für hohe Geschwindigkeit tauglichen Abgriffseigenschaften und zu vermeidenden nachteiligen Impuls-Schwing- und Funkenschlageffekten insbesondere auch die Aufgabe zugrunde, Verschleiß im Spannungsabgriff zu vermindern, damit Wartungsintervalle zu erhöhen und im Fall einer Wartung, eines Komponentenaustausches bzw. einer Erstmontage, den notwendigen Aufwand für einen derartigen Eingriff in das Fahrleitungssystem zu vermindern, insbesondere in Form einer (signifikanten) Reduzierung der Montage- und Unterbrechungszeit im betreffenden Fahrleitungssystem.

Die Aufgabe wird durch die Streckentrennvorrichtung mit den Merkmalen des unabhängigen Anspruchs gelöst; vorteilhafte Weiterbildungen der Erfindung sind in den Unteransprüchen beschrieben.

In erfindungsgemäß vorteilhafter Weise ist mindestens einer der Fahrdrahtanschlussköpfe so ausgestaltet, dass er - einstellbar - einen Niveauausgleich gestattet, dergestalt, dass das freie Ende der Fahrleitung (gehalten vom betreffenden Fahrdrahtanschlusskopf), bezogen auf einen Stromabnehmerkontakt bzw. eine Ebene des Stromabnehmerkontakts, auf eine gemeinsame Ebene mit dem (gleichermaßen am betreffenden Fahrdrahtanschlusskopf befestigten) Ende der Leitungsstranganordnung bringbar ist, wobei dies in besonders bevorzugter erfinderischer Weise in Form einer stufenlosen Ausrichtung geschehen kann.

Dadurch erreicht die vorliegende Erfindung zunächst vorteilhaft, dass der mindestens eine, in der erfindungsgemäßen Weise realisierte Fahrdrahtanschlusskopf keine (einen unerwünschten Impuls oder dergleichen dynamischen Effekt erzeugende) Treppen- oder Stoßstelle bewirkt, vielmehr gleitet, auch bei hohen Abgriffsgeschwindigkeiten, ein Stromabnehmer eines zusammenwirkenden Fahrzeugs praktisch übergangslos und damit störungsfrei über diese Kontaktstelle.

Zusätzlich wird durch die vorliegende Erfindung das Dynamikverhalten der Streckentrennvorrichtung dadurch verbessert, dass die vorliegende Erfindung mittels der Leitungsstranganordnung schienen- und kufenlos realisiert ist, mit anderen Worten, die Leitungsstränge sind sämtlichst aus einem Fahrdraht- bzw. Fahrleitungsmaterial realisiert, wirken entsprechend elastisch und dämpfend, sodass insbesondere das nachteilige Aufschwingen traditioneller starrer Kufen- bzw. Schienenstrukturen nicht auftritt.

Zusätzlich vorteilhaft wird dieser Effekt unterstützt durch die erfindungsgemäße Maßnahme, das zum Verbinden mit dem betreffenden Fahrdrahtanschlusskopf vorgesehene Ende der Leitungsstranganordnung als durchgehenden umgelenkten Leitungsabschnitt (und damit als kontinuierlich fortgesetzten Abschnitt aus einem Fahrdrahtmaterial) auszubilden, wobei, bevorzugt, dieser umgelenkte Abschnitt zum Ausbilden einer Aufspreizung um eine Rolle (alternativ einen Kreis- bzw. Ringabschnitt) der Niveauausgleichsmittel geführt ist. Dies bewirkt zunächst eine offensichtliche Vereinfachung der konstruktiven Realisierung, denn mit einem einzelnen durchgehenden und erfindungsgemäß umgelenkten Leitungsabschnitt lassen sich daraufhin bereits zwei Stränge der Leitungsstranganordnung realisieren (zumindest bis zu einem dann in einem jeweiligen Einzelstrang vorzusehenden Isolator). Zusätzlich bietet dieses umgelenkte Ende der Leitungsstranganordnung einen signifikanten Montagevorteil der Streckentrennvorrichtung, nämlich dadurch, dass für eine Montage (Demontage) dieses umgelenkte Ende lediglich um die Rolle bzw. den Kreis- bzw. Ringabschnitt gelegt werden muss, um insoweit die Streckentrennvorrichtung (bei bereits am zugeordneten freien Ende der Fahrleitung festgelegtem Fahrdrahtanschlusskopf) zu montieren. Zu diesem Zweck ist dann die Rolle bzw. der Kreis- bzw. Ringsabschnitt mit einer Aufnahme für den umgelenkten Leitungsabschnitt so versehen, dass dieser, etwa bei horizontal angeordneter Rolle und entsprechender Vorspannung des Drahtmaterials des umgelenkten Leitungsabschnitts, auf der Rolle bzw. dem Kreis- bzw. Ringabschnitt gehalten und vor einem Herabfallen geschützt ist.

Zur weiteren Vereinfachung der Montage sieht dann die Erfindung weiterbildungsgemäß vor, die ohnehin zum Verstellen der Rolle bzw. des Kreis- bzw. Ringabschnitts vorgesehene Niveauausgleichsmittel so auszugestalten, dass entlang einer bevorzugt senkrecht zur gemeinsamen Ebene (also in einer Ebene der Fahrleitung sowie der Leitungsstranganordnung, entsprechend insoweit einer Ebene des Stromabnehmerkontakts) diese Rolle bzw. Kreis- bzw. Ringabschnitt verstellbar sind und noch weiter bevorzugt zwischen einer in einem Körper des Fahrdrahtanschlusskopfes vorgesehenen Aufnahmeposition, an welcher der umgelenkte Leitungsabschnitt nicht entfernt werden bzw. abfallen kann, und einer Montageposition, typischerweise außerhalb der Überdeckung mit dem Körper des Fahrdrahtanschlusses, an welcher auf einfache Weise durch Umlegen bzw. Umhängen die Montage des (als umgelenkter Leitungsabschnitt ausgebildeten) Endes der Leitungsstranganordnung montiert werden kann.

In konstruktiv besonders einfacher Weise ist diese Funktionalität der Niveauausgleichsmittel (in der beschriebenen weiterbildungsgemäßen Weise gleichzeitig wirkend zum Ermöglichen einer Montage bzw. Demontage des umgelenkten Leitungsabschnitts am Ende der Leitungsstranganordnung) realisiert mit einer geeignet entlang einer Gewindelängsachse durch Schrauben bewegbaren Verstelltechnologie, welche nicht nur die erfindungsgemäße präzise Justage zum Niveauausgleich gestattet, sondern zusätzlich, etwa mit geeigneten Kontermuttern oder dergleichen, auch in einer Justier- sowie Befestigungsposition festlegbar ist.

In konstruktiv besonders bevorzugter Weise ist der Fahrdrahtanschlusskopf langgestreckt ausgebildet, dergestalt, dass sich entlang einer Erstreckungsrichtung eine (bevorzugt hinterschnitten ausgebildete) Nut ausgebildet ist, welche das Einführen des freien Endes der Fahrleitung gestattet, also querschnittlich insbesondere an eine - unverschlissene - Querschnittskontur der Fahrleitung angepasst ist, welche dann, bevorzugt durch senkrecht zur Erstreckungsrichtung angreifende Klemmschrauben oder dergleichen Festlegungsmittel, das lösbare mechanische Verkoppeln der Fahrleitung mit dem Fahrdrahtanschlusskopf gestattet.

Der Fahrdrahtanschlusskopf, wiederum bevorzugt in der weiterbildungsgemäßen langgestreckten Form, kann dann einends, weiter bevorzugt in Form eines verbreiterten Abschnitts, die erfindungsgemäßen Niveauausgleichsmittel, bevorzugt realisiert in Form der als vorteilhaft diskutierten Schraubanordnung mit ansitzender Rolle bzw. Kreis- bzw. Ringsabschnitt, aufnehmen und so auf konstruktiv einfache, gleichwohl hoch wirksame und einfach zu montierende Weise die erfindungsgemäßen Grundprinzipien weiterbilden.

Eine weitere bevorzugte Ausgestaltung der Erfindung, welche für sich, jedoch auch alternativ in Verbindung mit den vorstehend diskutierten Ausführungsbeispielen die Erfindung weiterbildet, sieht vor, dass in bevorzugt zueinander parallel verlaufende Einzelstränge der Leitungsstranganordnung langgestreckt ausgebildete Hochspannungsisolatormittel eingeschleift sind. Diese sind vorteilhaft, bezogen auf eine Erstreckungsrichtung der Leitungsstranganordnung und damit auch eine Erstreckungsrichtung der Streckentrennvorrichtung zwischen den Enden der Fahrleitung, zueinander versetzt angeordnet und überdecken sich insbesondere nicht, wodurch der vorteilhafte Effekt realisierbar ist, dass diese Hochspannungsisolatoren (welche entsprechend den jeweiligen Vorgaben an die Fahrleitungsspannung in ansonsten üblicher Weise ausgestaltet sind) so montiert und vorgesehen sind (weiter bevorzugt durch entsprechende Ausgestaltung von geeigneten Verbinderknoten), dass die Isolatoren oberhalb der gemeinsamen Ebene (von freiem Ende der Fahrleitung und Ende der Leitungsstranganordnung, mithin der Ebene des Stromabnehmerkontakts) liegen und damit keine nachteilige Beeinflussung des Gleitverhaltens eines Stromabnehmers entlang der Leitungsstranganordnung geschieht. Zum Spannungsausgleich zwischen den Einzelsträngen auf jeweiligen Seiten der Isolatormittel sind weiterbildungsgemäß Drahtverbindungen in Form eines jeweiligen Diagonalleitungsabschnitts vorgesehen - diagonal aufgrund des weiterbildungsgemäßen Versatzes der Hochspannungsisolatoren entlang der Längsrichtung. Eine besonders elegante Weiterbildung der Diagonalleitungsabschnitte sieht vor, diese wiederum kontinuierlich und einsträngig an den umgelenkten Leitungsabschnitt anzusetzen bzw. diesen entsprechend fortzusetzen, sodass insoweit eine gemeinsame Seite einer zweisträngigen Leitungsstranganordnung zwischen den jeweiligen Isolatormitteln und dem kopfseitigen Ende mittels eines einzigen kontinuierlichen Drahtstranges realisierbar ist. Besonders bevorzugt sorgen die erwähnten Verbinderknoten nicht nur für die entsprechende Ankopplung (mechanisch und elektrisch), diese gestatten auch ein entsprechendes Positionieren der Hochspannungsisolatormittel, vorteilhaft oberhalb der gemeinsamen Ebene.

Eine weitere bevorzugte Ausführungsform der Erfindung sieht vor, dass - bevorzugt auf jeweiligen Seiten der Isolatormittel - an einen Verbindungsknoten jeweils streben- bzw. stegartige Spreizmittel angreifen, welche zwei Einzelleitungsstränge vorbestimmt aufspreizen. Nicht nur kann über diese Spreizmittel dann der Abstand der Einzelstränge (in der gemeinsamen Ebene) bestimmt werden, auch bieten diese die Möglichkeit des zusätzlichen Umlenkens eines einem Verbindungsknoten gegenüberliegenden Leitungsabschnitts.

Schließlich ermöglichen es die Spreizmittel mittels eines bevorzugt zentrischen, zwischen einem Paar von Einzelsträngen vorgesehenen Gelenkpunktes, die Leitungsstranganordnung hängend an einer insbesondere als oberhalb der Fahrleitung und der Streckentrennvorrichtung vorgesehenen Trägerdraht realisierten Trägeranordnung (weiter bevorzugt durch ein konstruktiv und in der Montage durch einfaches Hängen realisiert) zu befestigen, und es wird weiterbildungsgemäß der mittige Angriffspunkt der Spreizmittel als Kipp- bzw. Schwenkachse zur Realisierung eines weiter bevorzugt einstellbaren Verschwenkens bzw. Verkippens beider oder lediglich eines der Einzelstränge verwendet. Eine derartige Maßnahme ermöglicht damit in konstruktiv besonders einfacher Weise etwa das Anpassen an Überhöhungen oder dergleichen Niveauänderungen einer unterhalb der Fahrleitung verlaufenden Schienenanordnung, mit der Möglichkeit, eine entsprechende Parallelität für einen Stromabnehmer eines darauf fahrenden Fahrzeugs im Zusammenwirken mit der (mehrsträngigen) Streckenvorrichtung zu erreichen.

Im Ergebnis erreicht die vorliegende Erfindung in konstruktiv überraschend einfacher und eleganter Weise eine signifikante Verbesserung der aus dem Stand der Technik bekannten Streckentrenntechnologien, nicht nur im Hinblick auf deutliche Verschleißminderung und verbesserte Dämpfungseigenschaften (bzw. reduziertes unerwünschtes Schwingungsverhalten), auch ist durch die vorliegende Erfindung, mit der Möglichkeit, die erfindungsgemäßen Fahrdrahtanschlussköpfe (jeweils) an freien Enden der Fahrleitung zu montieren, um dann die (entsprechend vormontierte) Leitungsstranganordnung in jeweilige Enden der Fahrdrahtanschlussköpfe einzuhängen, eine signifikante Verminderung der Montagezeit erreichbar, wobei zusätzlich, insbesondere unter schlechten Lichtverhältnissen, auch die Orientierung und Montagearbeit eingesetzter Montagepersonen vereinfacht ist.

Simulationen haben gezeigt, dass durch die Realisierung der vorliegenden Erfindung in einem bevorzugten Verwendungsgebiet eines Oberleitungssystems mit Fahrwechselspannung bis zu 27kV die aus dem Stand der Technik typischerweise zwischen Wartungsintervallen liegenden 100 000 bis 150 000 Beschleifungen im Hochgeschwindigkeitsbereich auf im Idealfall bis zu 2 000 000 Beschleifungen erhöhbar sind, was bei stark frequentierten Fahrstrecken zu einer Standzeit von 6 bis 8 Jahren zwischen Wartungsintervallen führt. Diese Vorteile, in Verbindung mit der erläuterten vereinfachten Montage und verkürzter Montagezeit, führt damit zu überragenden Vorteilen der vorliegenden Erfindung gegenüber dem Stand der Technik, wodurch zu erwarten ist, dass zukünftig signifikante Anteile von Streckentrennern durch die erfindungsgemäße Technologie realisiert werden.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine Perspektivansicht auf die Streckentrennvorrichtung gemäß einem ersten Ausführungsbeispiel der vorliegenden Erfindung;
- Fig. 2: eine Unteransicht auf die Vorrichtung des Ausführungsbeispiels der Fig. 1;
- Fig. 3: eine Seitenansicht der Vorrichtung gemäß Fig. 1, Fig. 2;
- Fig. 4: eine Perspektivansicht analog Fig. 1 zum Illustrieren einer Weiterbildung des Ausführungsbeispiels, bei welcher die Streckentrennvorrichtung an einem Trägerdraht aufgehängt ist;
- Fig. 5, 7: Perspektivansichten des beidends bei den Ausführungsbeispielen der Fig. 1 bis 4 eingesetzten Fahrdrahtanschlusskopfes;
- Fig. 6: eine Seitenansicht des Fahrdrahtanschlusskopfes von Fig. 5, 7 und
- Fig. 8: eine Unteransicht auf den Fahrdrahtanschlusskopf.

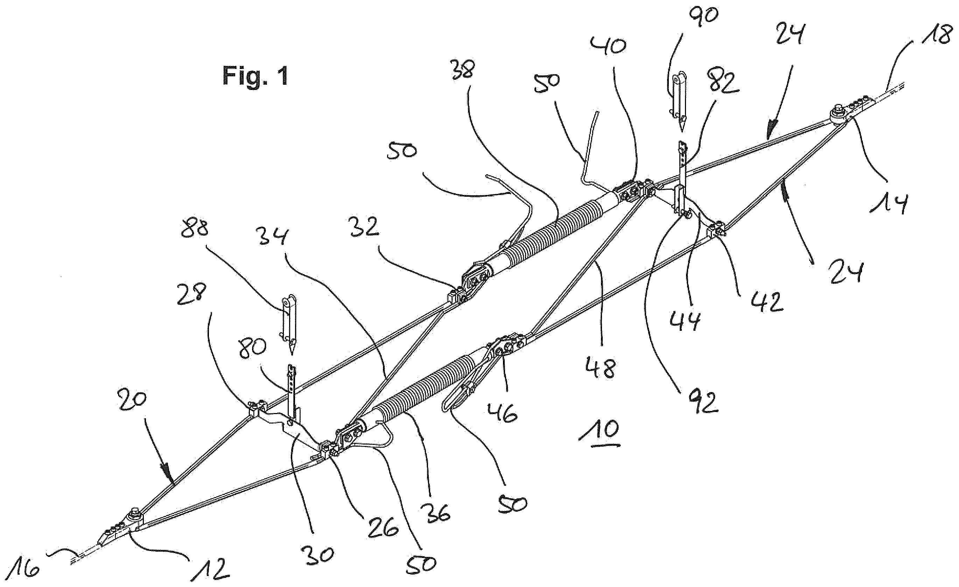

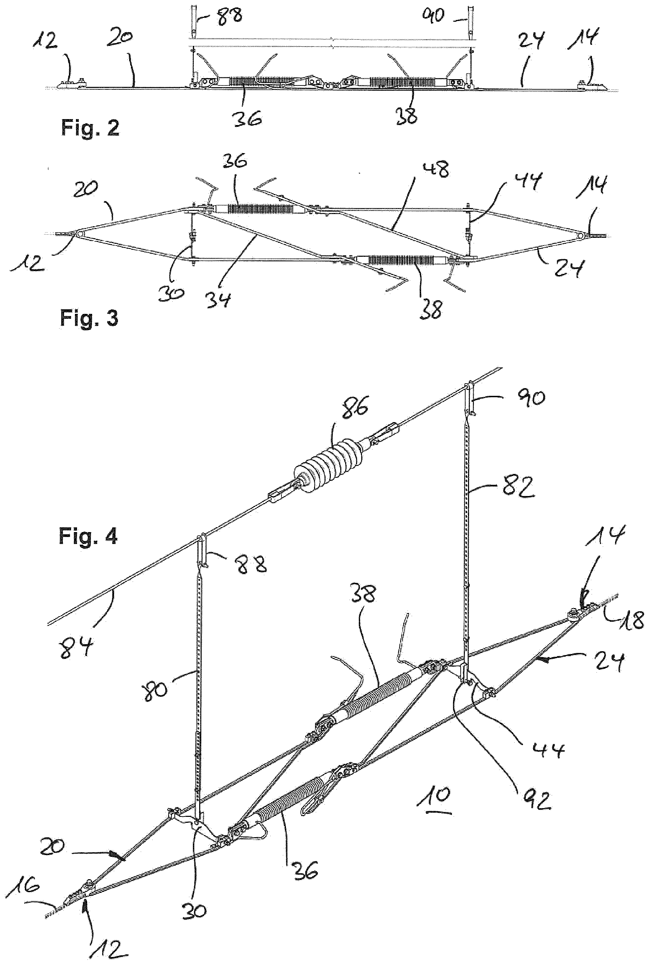

Die Perspektivansicht der Fig. 1, ergänzt durch die weiteren Ansichten der Fig. 2, 3 verdeutlicht die konstruktive Realisierung der Streckentrennvorrichtung eines ersten bevorzugten Ausführungsbeispiels, bei welchem eine zwei zueinander parallele Leitungsstränge aufweisende Leitungsstranganordnung 10 jeweils endseitig über Fahrdrahtanschlussköpfe 12, 14 mit zugehörigen (freien) Enden einer Hochspannungsfahrleitung 16 bzw. 18 verbunden ist.

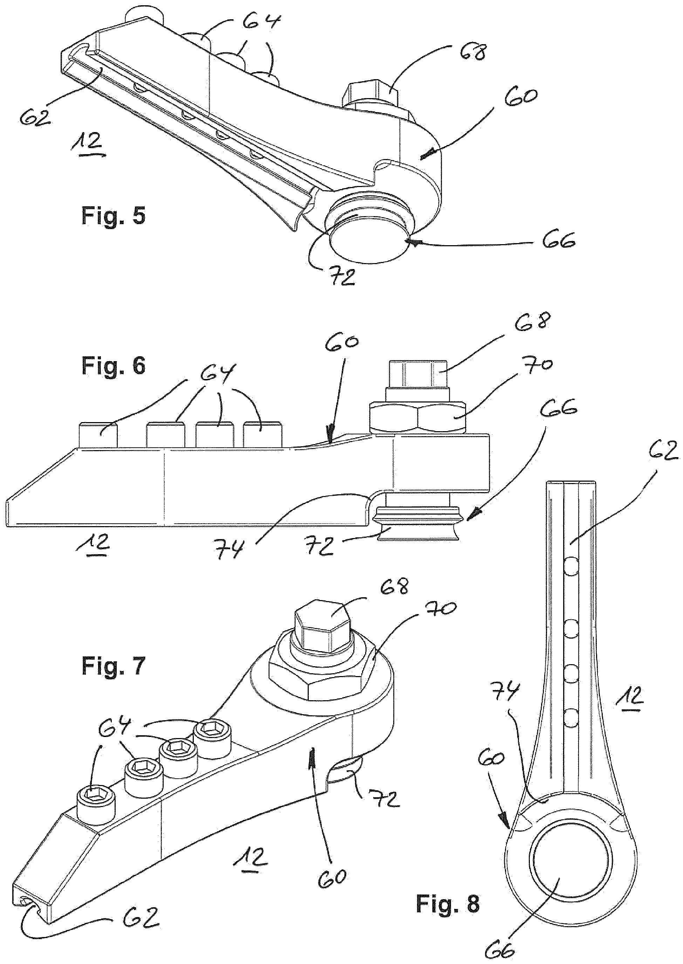

In der Perspektivansicht der Fig. 1 erfolgt eine schräge Draufsicht auf die Anordnung; die Fig. 3 als Seitenansicht verdeutlicht, wie (nicht gezeigte) Stromabnehmer von unten an die Anordnung angreifen, sodass die Unterseite der Fig. 3 insoweit einer nachfolgend im Detail zu beschreibenden gemeinsamen Ebene zwischen den jeweiligen freien Enden 16 bzw. 18 und einem als umgelenkter Leitungsabschnitt 20 bzw. 24 realisierten jeweiligen Ende der Leitungsstranganordnung 10 entspricht. Konkret sind diese jeweiligen umgelenkten Leitungsabschnitte aus einem Fahrdrahtmaterial realisiert, wie es auch für den durch die Streckenklemmvorrichtung 10 unterbrochenen Fahrdraht (mit Enden 16, 18) benutzt wird, wobei auch andere Drahtausgestaltungen verwendet werden können. In den gezeigten Ausführungsbeispielen, insoweit symmetrisch, erstreckt sich der umgelenkte Leitungsabschnitt zum linksseitigen Fahrdrahtanschlusskopf 12 von einem ersten Verbinderknoten 26 über eine (im Detail in den Ansichten der Fig. 5 bis 8 gezeigte und nachfolgend zu erläuternde) höhenverstellbare Umlenkrolle des Fahrdrahtanschlusskopfes 12, umgelenkt zu einem seitlichen (und nochmals eine geringfügige Abwinkelung bzw. Umlenkung bewirkende) Kontaktende 28 einer ersten Strebeneinheit 30 bis hin zu einem zweiten Verbinderknoten 32, von wo aus dann in Form eines Diagonalabschnitts 34 die Leitung zurück zum ersten Verbinderknoten 26 geführt wird. Beide Verbinderknoten 26, 32 sind so ausgestaltet, dass diese nicht nur die jeweiligen Drahtenden (bzw. Drahtumlenkungen) mechanisch halten und führen können, auch wird deutlich (vgl. insbesondere die Seitenansicht der Fig. 3), dass daran befestigte, langgestreckte Hochspannungsisolatoren 36 bzw. 38 sich aus der gemeinsamen Ebene von umgelenktem Leitungsabschnitt und Drahtenden 16, 18 aufwärts erheben, mithin also kein Stromabnehmerkontakt mit diesen Isolatoren im Fahrbetrieb erfolgen kann.

Die für den linksseitigen Fahrdrahtanschlusskopf 12 (Fig. 1) erläuterte Leitungsführung der Stränge erfolgt gleichermaßen für den (in der Figur rechtsseitigen) Fahrdrahtanschlusskopf 14, wobei der umgelenkte Leitungsabschnitt 24 von einem Verbinderknoten 40 zum Anschlusskopf 14, dort umgelenkt durch eine Umlenkrolle (siehe unten) und über einen Umlenkkontakt 42 an einer zweiten Querstrebe 44 bis zu einem weiteren Verbinderknoten 46 geführt wird, von wo aus, in Form einer weiteren Diagonalleitung 48, der bevorzugt durchgängig und einstückig ausgebildete Drahtabschnitt zurück zum Verbinderknoten 44 geführt ist.

Die Fig. 1 bis 3 zeigen zusätzlich (und in ansonsten bekannter Weise) an den Verbinderknoten jeweils beidends der Isolatoren 36 bzw. 38 vorgesehene Funkenhörner 50.

Anhand der Fig. 5 bis 8 wird im Detail die konstruktive Realisierung der Fahrdrahtanschlussköpfe 12 bzw. 14 erläutert. Diese bestehen aus einem langgestreckten Körper 60 aus einem Metallmaterial, in dessen Unterseite eine Längsnut 62, hinterschnitten und entsprechend einer Querschnittskontur des vorzusehenden Fahrdrahtendes, eingebracht ist (z.B. durch Fräsen). Durch den erkennbaren Hinterschnitt lässt sich das eingeschobene freie Ende des Fahrdrahtes (z.B. 16 in Fig. 1) mit vier Klemmschrauben 64 geeignet festlegen.

In einem im Durchmesser verbreiterten Endbereich des langgestreckten Körpers 60 des Fahrdrahtanschlusskopfes ist, insbesondere erkennbar in der Seitendarstellung der Fig. 6, eine Niveauausgleichsvorrichtung (Niveauausgleichsmittel) in Form einer höhenverstellbaren Aufnahme- und Umlenkrolle 66 vorgesehen, welche durch ein mit einem Betätigungsabschnitt 68 verstellbares Schraubgewinde in einer Querrichtung zur Längserstreckung des Körpers 60 (und damit in einer Vertikalrichtung in der Figurenebene der Fig. 6) höhenverstellbar ist; eine Überwurf- und Kontermutter 70 dient dann zum Fixieren in einer gefundenen Einstellposition. Die endseitig des Gewindeabschnitts drehbar gelagerte Rolle 66 weist einen Lauf- bzw. Umlenkabschnitt 72 auf, um welchen der Leitungsabschnitt 20 (bzw. 24) herumgeführt ist.

Durch Betätigung am Schraubenabschnitt 68 erfolgt entsprechend eine Höhenverstellung der Rolle 66, mit der Möglichkeit, den im Abschnitt 72 geführten und umgelenkten Leitungsabschnitt präzise auf eine Höhe des in der Nut 62 gehaltenen (und in diese vollständig eingeschobenen) Leitungsendes 16 auszurichten, sodass auf diese Weise ein stufenloser, nahezu unterbrechungsfreier Übergang erfolgen kann.

Ein weiteres (in der Figurenebene der Fig. 6 abwärts gerichtetes) Verstellen der Rolle 66 bringt diese dann aus einem Überdeckungsbereich 74 des Gehäusekörpers 60, sodass, zu Montagezwecken, der umgelenkte Leitungsabschnitt einfach abgenommen oder aufgesetzt werden kann. Dagegen ist dieser, bei entsprechend eingeschobenem (zurückgeführten) Verstellzustand der Rolle 66 durch den bogenförmigen Gehäuseabschnitt 74 (siehe insbesondere auch die Unteransicht der Fig. 8) effektiv vor einem Abfallen (Herausfallen) gesichert, sodass auf konstruktiv einfache Weise eine Sicherung des umgelenkten Leitungsabschnitts bzw. des damit gebildeten Endes der Leitungsstranganordnung am Kopf 60 gewährleistet ist.

Die Variante der Fig. 4 verdeutlicht eine Weiterbildung des beschriebenen Ausführungsbeispiels, wobei zunächst die Leitungsstranganordnung 10 in der Fig. 4 identisch der der Fig. 1 entspricht.

Zusätzlich zeigt die Fig. 4, wie mittig an die Querstreben 30 bzw. 44 angreifende langgestreckte Vertikalträger 80, 82 (üblicherweise realisiert in Form von mehrteiligen und dadurch längenverstellbaren Stanzbändern) eine Verbindung zu einem oberhalb der Streckentrennvorrichtung und parallel zu dieser geführten Trägerdrahtanordnung 84 herstellen (diese ist, analog zur Streckentrennvorrichtung und der damit bewirkten Aufteilung in Sektoren, mit einem Hochspannungs-Mittelisolator 86 versehen). Konkret greifen die Vertikalträger 80, 82 an einer eine Schwenkachse ausbildenden Mittelposition der Spreizstreben 30 bzw. 44 an und weisen anderenends hakenartige Befestigungsabschnitte 88 bzw. 90 auf, welche ein Befestigen am Trägerdraht 84 durch Überwerfen bzw. Überhängen (und damit auf mechanisch und konstruktiv einfachste Art) gestatten. Im Bereich der jeweiligen Spreizstreben 30, 44 sorgen andeutungsweise in den Figuren erkennbare, mittels Schraubgewinden realisierte Verstellmittel 92 dafür, dass die Ausrichtung zwischen einer Quererstreckung der Streben 30 bzw. 44 und der zugeordneten Vertikalträger 80, 82 aus der Rechtwinkligkeit verstellbar ist, mit der Wirkung, dass ein Neigen bzw. Verkippen der gezeigten Leitungsstranganordnung ermöglicht ist.

Zur Montage der in den Ausführungsbeispielen gezeigten Streckentrennvorrichtung würde ein Monteur zunächst an der vorgesehenen Trennstelle die Fahrleitung auftrennen und entsprechende freie Enden 16 bzw. 18 (ggf. geeignet abgelängt) herstellen. An diesen kann dann, durch Einschieben in die Nut 62 und nachfolgendes Befestigen der Klemmschrauben 64, die Festlegung des Kopfes 12 (bzw. 14) erfolgen.

Die Bedienperson würde dann die Leitungsstranganordnung, bestehend aus den umgelenkten Leitungsabschnitten, der Mehrzahl der Verbinderknoten, den Isolatoren sowie den Spreizstreben 30, 44 vormontieren, die jeweiligen Rollen 66 der Köpfe 12, 14 zur Aufnahme des umgelenkten Leitungsabschnitts absenken und zwischen das Paar der Fahrdrahtanschlussköpfe die Leitungsstranganordnung durch Einhängen und nachfolgendes Anheben der Rollen 66 bis in den Überdeckungsbereich 74 der jeweiligen Fahrdrahtanschlusskopfkörper 60 befestigen. Nachfolgend kann dann noch, entsprechend dem Niveau der Fahrleitungsenden 16 bzw. 18 (auch zur Berücksichtigung eines etwaigen Verschleiß- bzw. Abfahrzustandes) der Niveauausgleich durch Feinjustage der Schraubenbetätigung 68 erfolgen, woraufhin dann diese Position mittels Konterschraube 70 fest fixierbar ist. Eine Befestigung am Trägerdraht 84 (Fig. 4) erfolgt durch Montieren und Einhängen der Vertikalträger 80 bzw. 82 (wobei auch der Trägerdraht mit dem Isolator 86 versehen worden ist).

Auf die beschriebene Weise lässt sich die erfindungsgemäße Streckentrennvorrichtung im beschriebenen Ausführungsbeispiel extrem zeitsparend, gleichzeitig mit einfachen Montageschritten und Handgriffen montieren, sodass lediglich eine minimale Unterbrechung des Fahrbetriebs erforderlich ist und insbesondere auch eine zuverlässige Montage unter schlechten Umgebungsbedingungen, etwa bei Nacht, vereinfacht möglich ist.

## Patentansprüche

1. Streckentrennvorrichtung für eine insbesondere schienengebundenen Fahrzeugen als Oberleitung zugeordnete und Hochspannung führende Fahrleitung,
mit einer sich zwischen zwei Fahrdrahtanschlussköpfen (12, 14) gespannt oder spannbar erstreckenden mehrsträngigen und mit Isolatormitteln (36, 38) versehenen Leitungsstranganordnung (10), die mittels jeweiliger Aufnahmeabschnitte (66) der Fahrdrahtanschlussköpfe elektrisch und mechanisch kontaktierend zwischen freien Enden (16, 18) der Fahrleitung montierbar ausgebildet ist,
wobei mindestens einer der Fahrdrahtanschlussköpfe (12, 14) zum Zusammenwirken mit einem kopfseitigen Ende (20, 24) der Leitungsstranganordnung (10) einstellbare Niveauausgleichsmittel (66, 68, 70) aufweist,
die so ausgebildet sind, dass, bezogen auf einen Stromabnehmerkontakt, insbesondere eine Stromabnehmerkontaktseite der Fahrleitung und/oder eine Stromabnehmerkontaktebene, das freie Ende der Fahrleitung in eine gemeinsame Ebene mit dem Ende der Leitungsstranganordnung bringbar und/oder stufenlos auf dieses ausrichtbar ist wobei das Ende der Leitungsstranganordnung als durchgehender, umgelenkter Leitungsabschnitt (20, 24) ausgebildet ist, der zum Ausbilden einer Aufspreizung um eine Rolle (66) oder einen Kreis- und/oder Ringabschnitt der Niveauausgleichsmittel geführt ist.

2. Vorrichtung nach Anspruch 1, **dadurch gekennzeichnet, dass** die Rolle bzw. der Kreis- bzw. Ringabschnitt entlang einer bevorzugt senkrecht zur gemeinsamen Ebene ausgebildeten Verstellachse einstellbar ist.

3. Vorrichtung nach Anspruch 2, **dadurch gekennzeichnet, dass** die Verstellachse in einem Endabschnitt des langgestreckt ausgebildeten Fahrdrahtanschlusskopfes vorgesehen ist
und in diesem eine sich entlang einer Erstreckungsrichtung des Fahrdrahtanschlusskopfes erstreckende, mit Klemmmitteln (64) versehene, bevorzugt hinterschnittene Nut (62) zur Aufnahme des freien Endes (16, 18) ausgebildet ist.

4. Vorrichtung nach Anspruch 2 oder 3, **dadurch gekennzeichnet, dass** die Rolle (66) bzw. der Kreis- bzw. Ringabschnitt zur Montage der Leitungsstranganordnung, insbesondere bei am freien Ende der Fahrleitung befestigten Zustand des Fahrdrahtanschlusskopfes, so aus einer Überdeckung (74) mit einem Körper (60) des Fahrdrahtanschlusskopfes herausführbar ist, dass das Ende der Leitungsstranganordnung in die Rolle bzw. in den Kreis- bzw. Ringabschnitt einführbar und durch nachfolgendes Zurückführen gegen ein Abfallen sicherbar ist.

5. Vorrichtung nach einem der Ansprüche 1 bis 4, **dadurch gekennzeichnet, dass** in bevorzugt zueinander parallel verlaufende Einzelstränge der Leitungsstranganordnung langgestreckt ausgebildete Hochspannungsisolatormittel (36, 38) eingeschleift sind, die entlang einer Erstreckungsrichtung der Leitungsstranganordnung zueinander versetzt und bevorzugt außerhalb einer Überdeckung zueinander angeordnet sind.

6. Vorrichtung nach Anspruch 5, **dadurch gekennzeichnet, dass** mit einem der Fahrdrahtanschlussköpfe verbundene der Hochspannungsisolatormittel mittels eines Diagonalleitungsabschnitts (34, 48) miteinander verbunden sind, welcher bevorzugt als den umgelenkten Leitungsabschnitt (20, 24) durchgehend fortsetzender Leitungsabschnitt ausgebildet ist.

7. Vorrichtung nach einem der Ansprüche 1 bis 6, **dadurch gekennzeichnet, dass** einends des durchgehenden, umgelenkten Leitungsabschnitts (20, 24) ein Verbinderknoten (16, 40) ausgebildet ist, der den Leitungsabschnitt mit Hochspannungsisolatormitteln (36, 38) eines ersten Einzelstrangs der Leitungsstranganordnung verbindet.

8. Vorrichtung nach Anspruch 7, **dadurch gekennzeichnet, dass** an den Verbindungsknoten streben- und/oder stegartige Spreizmittel (30, 44) zum Vorbestimmen der Aufspreizung des umgelenkten Leitungsabschnitts mit einem Ende angreifen,
die anderenends eine zusätzliche Umlenkung des Leitungsabschnitts eines dem ersten Einzelstrang benachbarten und/oder gegenüberliegenden zweiten Einzelstrangs bewirken.

9. Vorrichtung nach Anspruch 8, **dadurch gekennzeichnet, dass** die Spreizmittel an einer i.w. parallel zur Leitungsstranganordnung vorgesehenen oder vorsehbaren Trägeranordnung (84), insbesondere Trägerdraht, gehalten und bevorzugt mit einstellbaren Kipp- und/oder Schwenkmitteln versehen sind, die ein einstellbares Verschwenken oder Verkippen des ersten und/oder des zweiten Einzelstrangs, insbesondere um eine quer zu einer Erstreckungsrichtung der Spreizmittel verlaufende Achse, ermöglichen.

10. Vorrichtung nach Anspruch 9, **dadurch gekennzeichnet, dass** die Spreizmittel über langgestreckte Vertikalträgermittel (80) mit der als Trägerdraht ausgebildete Trägeranordnung so verbindbar sind, dass ein den Spreizmitteln entgegengesetztes Ende der Vertikalträgermittel eine Überwurf- und/oder Hängeverbindung (88, 90) herstellen kann.

11. Verwendung der Streckentrennvorrichtung nach einem der Ansprüche 1 bis 10 zur Realisierung eines Streckentrenners für eine mit einer Fahrwechselspannung bis zu 27kV betriebenes oder betreibbares Oberleitungssystem.

## Claims

1. A section disconnect device for a contact line assigned in particular to railborne vehicles as overhead line and carrying high voltage
having a line section arrangement (10) with multi-section extending, such that it is tensioned or can be tensioned, between two contact-wire connecting heads (12, 14) and provided with insulator means (36, 38),
said line section arrangement being constructed such that it can be mounted by means of respective accommodating sections (66) of the contact-wire connecting heads in an electrically and mechanically contacting manner between free ends (16, 18) of the contact line,
at least one of the contact-wire connecting heads (12, 14) having adjustable level equalization means (66, 68, 70) for interacting with a head-side end (20, 24) of the line section arrangement (10),
which are constructed in such a manner that, with respect to a current collector contact, in particular a current-collector-contact side of the contact line and/or a current-collector-contact plane, the free end of the contact line can be brought into a common plane with the end of the line section arrangement and/or seamlessly aligned with the same, wherein the end of the line section arrangement is constructed as a continuous, diverted line section (20, 24), which is guided around a roller (66) or a circular and/or ring section of the level equalization means for forming a spread.

2. The device according to claim 1, **characterized in that** the roller or the circular or ring section can be adjusted along an adjustment axle preferably constructed perpendicularly to the common plane.

3. The device according to claim 2, **characterized in that** the adjustment axle is provided in an end section of the contact-wire connecting head, which is constructed in an elongated manner and in this contact-wire connecting head, a groove (62) is constructed for accommodating the free end (16, 18), which groove extends along a direction of extent of the contact-wire connecting head, is provided with clamping means (64) and is preferably undercut.

4. The device according to claim 2 or 3, **characterized in that** the roller (66) or the circular or ring section, for mounting the line section arrangement, in particular for the state of the contact-wire connecting head, in which it is fastened on the exposed end of the contact line, can be guided out of overlap (74) with a body (60) of the contact-wire connecting head in such a manner that the end of the line section arrangement can be inserted into the roller or into the circular or ring section and can be secured against falling off by a subsequent backward movement.

5. The device according to one of claims 1 to 4, **characterized in that** preferably multiple parallel arranged single line sections of the line section arrangement are looped in high-voltage insulator means (36, 38), which are constructed in an elongated manner, and which are separated from each other along a direction of extent of the line section arrangement and are preferably arranged outside of an overlap with one another.

6. The device according to claim 5, **characterized in that** high-voltage insulator means connected to one of the contact-wire connecting heads are connected to one another by means of a diagonal line section (34, 48), which is preferably constructed as a extending line section which continuously extends the diverted line section (20, 24).

7. The device according to one of claims 1 to 6, **characterized in that** at one end of the continuous, diverted line section (20, 24), a connector node (16, 40) is constructed, which connects the diverted line section to high-voltage insulator means (36, 38) of a first single line section of the line section arrangement.

8. The device according to claim 7, **characterized in that** strut- and/or bar shaped-like spreading means (30, 44) act at the connection nodes for predetermining the spread of the diverted line section with one end,
which at the other end effect an additional diversion of the line section of a second single line section adjacent to and/or opposite the first single line section.

9. The device according to claim 8, **characterized in that** the spreading means are held on a carrier arrangement (84), particularly carrier wire, which is or can be provided essentially parallel to the line section arrangement, and are preferably provided with adjustable tilting and/or pivoting means, which enable an adjustable pivoting or tilting of the first and/or the second single line section, particularly about an axis running transversely to a direction of extent of the spreading means.

10. The device according to claim 9, **characterized in that** the spreading means can be connected in such a manner to the carrier arrangement constructed as a carrier wire via elongated vertical carrier means (80), that an end of the vertical carrier means opposite the spreading means can produce a throw-over connection and/or hanging connection (88, 90).

11. The use of the section disconnect device according to one of claims 1 to 10 for realizing a section insulator for an overheadline system which is or can be operated with a driving AC voltage of up to 27 kV.

## Revendications

1. Dispositif d'isolation de section pour une caténaire assignée notamment à des véhicules ferroviaires comme ligne aérienne de contact et conduisant une haute tension,
ayant un assemblage de faisceaux de ligne (10) à plusieurs faisceaux qui s'étend de manière retendue ou retendable entre deux têtes de branchement de fil de contact (12, 14) et qui est pourvu de moyens d'isolateur (36, 38),
ledit assemblage de faisceaux de ligne (10) pouvant être monté entre des extrémités libres (16, 18) de la caténaire de manière à former un contact électrique ou mécanique au moyen de parties de logement (66) respectives des têtes de branchement de fil de contact,
au moins une des têtes de branchement de fil de contact (12, 14) ayant des moyens d'égalisation de niveau (66, 68, 70) qui peuvent être ajustés afin d'interagir avec une extrémité (20, 24) du coté tête de l'assemblage de faisceaux de ligne (10),
lesdits moyens d'égalisation de niveau étant réalisés de telle manière que, par rapport à un contact de collecteur de courant, notamment à un côté de contact de collecteur de courant de la caténaire et/ou un plan de contact de collecteur de courant, l'extrémité libre de la caténaire peut être amenée dans un plan commun avec l'extrémité de l'assemblage de faisceaux de ligne et/ou peut être alignée de manière continue sur ladite extrémité de l'assemblage de faisceaux de ligne, l'extrémité de l'assemblage de faisceaux de ligne étant réalisée comme partie de ligne (20, 24) continue et déviée qui est guidée autour d'un rouleau (66) et/ou d'une partie circulaire et/ou annulaire des moyens d'égalisation de niveau pour réaliser un écartement.

2. Dispositif selon la revendication 1, **caractérisé en ce que** le rouleau ou la partie circulaire ou annulaire peut être ajusté(e) le long d'un axe de déplacement de préférence réalisé perpendiculairement au plan commun.

3. Dispositif selon la revendication 2, **caractérisé en ce que** l'axe de déplacement est prévu dans une partie d'extrémité de la tête de branchement de fil de contact qui est réalisée de manière allongée
et qu'une rainure (62), de préférence contre-dépouillée, est réalisée dans celle-ci pour loger l'extrémité libre (16, 18), ladite rainure s'étendant le long d'une direction d'extension de la tête de branchement de fil de contact et étant pourvue de moyens de serrage (64).

4. Dispositif selon la revendication 2 ou la revendication 3, **caractérisé en ce qu'**afin de monter l'assemblage de faisceaux de ligne, le rouleau (66) ou la partie circulaire ou annulaire peut être sorti(e) d'un recouvrement (74) par un corps (60) de la tête de branchement de fil de contact, notamment quand la tête de branchement de fil de contact est fixée à l'extrémité libre de la caténaire, de telle manière que l'extrémité de l'assemblage de faisceaux de ligne peut être insérée dans le rouleau ou dans la partie circulaire ou annulaire et peut être protégée contre la chute par un renvoi suivant.

5. Dispositif selon l'une quelconque des revendications 1 à 4, **caractérisé en ce que** des moyens d'isolateur à haute tension (36, 38) allongés sont intégrés dans des faisceaux individuels de l'assemblage de faisceaux de ligne qui s'étendent de préférence parallèlement l'un à l'autre, lesdits moyens d'isolateur à haute tension étant décalés l'un par rapport à l'autre le long d'une direction d'extension de l'assemblage de faisceaux de ligne et étant disposés de préférence hors de recouvrement mutuel.

6. Dispositif selon la revendication 5, **caractérisé en ce que** des moyens d'isolateur à haute tension qui sont reliés à une des têtes de branchement de fil de contact sont reliés l'un à l'autre au moyen d'une partie de ligne diagonale (34, 48),
ladite partie de ligne diagonale étant réalisée de préférence comme partie de ligne qui poursuit de manière continue la partie de ligne (20, 24) déviée.

7. Dispositif selon l'une quelconque des revendications 1 à 6, **caractérisé en ce qu'**un nœud de connecteur (16, 40) est réalisé à une extrémité de la partie de ligne (20, 24) continue et déviée, ledit nœud de connecteur connectant la partie de ligne à des moyens d'isolateur à haute tension (36, 38) d'un premier faisceau individuel de l'assemblage de faisceaux de ligne.

8. Dispositif selon la revendication 7, **caractérisé en ce que** des moyens d'écartement (30, 44) en forme d'entretoise et/ou de traverse pour prédéfinir l'écartement de la partie de ligne déviée sont en prise avec le nœud de connecteur par une extrémité, lesdits moyens d'écartement entraînant à l'autre extrémité une déviation supplémentaire de la partie de ligne d'un deuxième faisceau individuel qui est adjacent et/ou opposé au premier faisceau individuel.

9. Dispositif selon la revendication 8, **caractérisé en ce que** les moyens d'écartement sont supportés sur un assemblage de support (84), notamment un fil de support, qui est prévu ou peut être prévu de manière essentiellement parallèle à l'assemblage de faisceaux de ligne, et les moyens d'écartement sont de préférence pourvu de moyens de basculement et/ou de pivotement ajustables qui permettent de pivoter ou de basculer le premier et/ou le deuxième faisceau individuel de manière ajustable, notamment autour d'un axe qui s'étend transversalement à une direction d'extension des moyens d'écartement.

10. Dispositif selon la revendication 9, **caractérisé en ce que** les moyens d'écartement peuvent être reliés de telle manière à l'assemblage de support réalisé comme fil de support via des moyens de support verticaux (80) allongés qu'une extrémité des moyens de support verticaux qui est opposée aux moyens d'écartement peut produire un branchement de housse et/ou de suspension (88, 90).

11. Utilisation du dispositif d'isolation de section selon l'une quelconque des revendications 1 à 10 pour réaliser un isolateur de section pour un système de lignes aériennes de contact qui fonctionne ou peut fonctionner à une tension alternative de caténaire allant à 27 kV.
